(19) Europäisches Patentamt
European Patent Office
Office européen des brevets

(11) EP 1 609 156 B1

(12) **EUROPEAN PATENT SPECIFICATION**

(45) Date of publication and mention of the grant of the patent:
**05.09.2007 Bulletin 2007/36**

(21) Application number: **04725079.0**

(22) Date of filing: **01.04.2004**

(51) Int Cl.:
***H01B 1/12*** (2006.01) ***B01D 71/68*** (2006.01)

(86) International application number:
**PCT/GB2004/001375**

(87) International publication number:
**WO 2004/088673 (14.10.2004 Gazette 2004/42)**

(54) **ION-CONDUCTING POLYMERIC MATERIALS**
IONENLEITFÄHIGE POLYMERMATERIALIEN
MATERIAUX POLYMERIQUES CONDUCTEURS D'IONS

(84) Designated Contracting States:
**AT BE BG CH CY CZ DE DK EE ES FI FR GB GR HU IE IT LI LU MC NL PL PT RO SE SI SK TR**

(30) Priority: **02.04.2003 GB 0307606**

(43) Date of publication of application:
**28.12.2005 Bulletin 2005/52**

(73) Proprietor: **VICTREX MANUFACTURING LIMITED**
**Thornton Cleveleys**
**Lancashire FY5 4QD (GB)**

(72) Inventors:
- **LOCKLEY, John, Edward**
  **Lancaster KA1 4SN (GB)**
- **WILSON, Brian**
  **Lancashire PR3 1JG (GB)**

(74) Representative: **Brierley, Anthony Paul**
**Appleyard Lees**
**15 Clare Road**
**Halifax**
**West Yorkshire HX1 2HY (GB)**

(56) References cited:
**EP-A- 0 145 305**
**EP-A- 0 202 849**
**EP-A- 0 277 834**
**WO-A-03/028140**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 609 156 B1

## Description

This invention relates to ion-conducting polymeric materials and particularly, although not exclusively, relates to a method of preparing a formulation of an ion-conducting polymeric material and such a formulation per se. Preferred embodiments relate to the use of formulations prepared in the manufacture of coatings or films of ion-conducting polymeric materials.

One type of polymer electrolyte membrane fuel cell (PEMFC), shown schematically in Figure 1 of the accompanying diagrammatic drawings, may comprise a thin sheet 2 of a hydrogen-ion conducting Polymer Electrolyte Membrane (PEM) sandwiched on both sides by a layer 4 of platinum catalyst and an electrode 6. The layers 2, 4, 6 make up a Membrane Electrode Assembly (MEA) of less than 1mm thickness.

In a PEMFC, hydrogen is introduced at the anode (fuel electrode) which results in the following electrochemical reaction:

$$\text{Pt-Anode (Fuel Electrode) } 2H_2 \rightarrow 4H^+ + 4e^-$$

The hydrogen ions migrate through the conducting PEM to the cathode. Simultaneously, an oxidant is introduced at the cathode (oxidant electrode) where the following electrochemical reaction takes place:

$$\text{Pt-Cathode (Oxidant Electrode) } O_2 + 4H^+ + 4e^- \rightarrow 2H_2O$$

Thus, electrons and protons are consumed to produce water and heat. Connecting the two electrodes through an external circuit causes an electrical current to flow in the circuit and withdraw electrical power from the cell.

Preferred ion-conducting polymeric materials for use as components of polymer electrolyte membranes in fuel cells have high conductivity (low EW, or high ion-exchange capacities), optimum water uptake for good conductivity and mechanical properties and solubility in solvents.which can be used to cast the membranes.

Examples of known ion-conducting polymeric materials are described in US 5985477 (Sumitomo) and US 5906716 (Hoechst). The polyaryletherketones and/or sulphones described are dissolved in a solvent, usually N-methylpyrrolidone (NMP), and are then cast to prepare membranes.

Whilst NMP is a very good solvent for casting membranes from a wide range of materials, membranes cast from NMP (especially polymer electrolyte membranes of fuel cells) can have defects and/or exhibit problems in downstream process steps. Furthermore, it is preferred for environmental and safety reasons to minimise the amounts of organic solvents used in chemical processes.

It is an object of the present invention to address problems associated with the preparation and/or use of formulations of ion-conducting polymeric materials.

According to a first aspect of the present invention, there is provided a method of preparing a formulation comprising an ion-conducting polymeric material, the method comprising:

(a) selecting an ion-conducting polymeric material of a type which includes:

(i) phenyl moieties;
(ii) carbonyl and/or sulphone moieties; and
(iii) ether and/or thioether moieties;

(b) selecting a solvent mixture comprising water and a first organic solvent in which mixture said ion-conducting polymeric material can be dissolved and/or dispersed;

(c) dissolving and/or dispersing said ion-conducting polymeric material in said solvent mixture;

(d) removing greater than 80% of the total amount of said first organic solvent in said solvent mixture, thereby to leave a formulation comprising said ion-conducting polymeric material dissolved and/or dispersed in a solvent formulation comprising a major amount of water.

Surprisingly, it has been found that a stable solution and/or dispersion of the polymeric material in a substantial amount of water can be prepared in the method which solution/dispersion would not generally be preparable by simply attempting to dissolve/disperse the polymeric material in a solvent formulation comprising the same amount of water, without the use of steps (b) to (d) of the method.

The formulations prepared in the method appear to the naked eye to be solutions; however, they are probably not true solutions but more likely are very fine dispersions of the ion-conducting polymeric material in the solvent formulation.

Said first organic solvent selected in step (b) is preferably water miscible at 25°C. Said first organic solvent preferably has a boiling point of less than that of water. The boiling point of the first organic solvent may be less than 95°C, suitably less than 90°C, preferably less than 85°C, more preferably less than 80°C, especially less than 75°C, at atmospheric pressure. The boiling point may be greater than 30°C, suitably greater than 40°C, preferably greater than 50°C, more preferably greater than 55°C at atmospheric pressure.

Said first organic solvent may have up to five, preferably up to four, carbon atoms. Preferably, said first organic solvent has two to four carbon atoms. Said first organic solvent preferably includes an hydroxy, ether or carbonyl functional group. Preferably, said first organic solvent includes only one of said functional groups. Said first organic solvent preferably does not include any other functional groups. Said first organic solvent preferably does not include any halogen atoms. Said first organic solvent is preferably saturated. Said solvent may be selected from alcohols, ethers (including cyclic ethers) and ketones, especially $C_{2-4}$ alcohols, ethers and ketones. Especially preferred first organic solvents are acetone, methylethylketone, ethanol and tetrahydrofuran.

Said solvent mixture selected in step (b) may include more than one organic solvent and each may be as described in any statement herein.

In one embodiment, said solvent mixture may include an optional second organic solvent. Said second organic solvent may have a boiling point which is greater than that of said first organic solvent so that said first organic solvent is preferentially removed in step (d) and, preferably, less than 10 wt%, more preferably less than 5 wt%, especially less than 1 wt%, of said second organic solvent is removed in step (d). Said second organic solvent may have a boiling point at atmospheric pressure which is at least 20°C greater than the boiling point of said first organic solvent. Said second organic solvent may be included to facilitate the preparation of articles, for example films, in accordance with the third aspect described hereinafter. Said second organic solvent may act as a coalescing agent during film formation. However, it is preferred for said second organic solvent to be included (if included at all) after step (d). Examples of second solvents are N-methylpyrrolidene and glycols such as ethylene glycol.

The ratio of the wt% of water to the wt% of said first organic solvent (preferably to the wt% of the total amount of organic solvent(s) in the mixture) is suitably in the range 0.25 to 2.5, preferably in the range 0.4 to 2.3 and, more preferably, in the range 0.5 to 1.5.

Suitably, said solvent mixture of step (c) includes at least 1 wt%, preferably at least 3 wt%, more preferably at least 7 wt%, especially at least 9 wt% of said ion-conducting polymeric material. Said solvent mixture may include less than 20 wt%, preferably less than 15 w%, especially less than 12 wt% of said ion-conducting polymeric material.

Step (c) of the method is preferably carried out at a temperature which is less than the boiling point of the solvent mixture. Thus, step (c) preferably comprises dissolving and/or dispersing said ion-conducting polymeric material in said solvent mixture under conditions at which said solvent mixture is not boiling. Suitably, step (c) is carried out at ambient temperature (eg 20°C) or above and at less than the boiling point of said solvent mixture.

Step (d) suitably includes removing greater than 85%, preferably greater than 90%, more preferably greater than 95 wt%, especially greater than 99 wt% of said first organic solvent in step (d). Preferably, substantially the entirety of said first organic solvent is removed in step (d).

Said first organic solvent is preferably evaporated off in step (d), suitably under a pressure of less than atmospheric pressure. After removal of the first organic solvent, the solvent formulation which includes a major amount of water suitably includes at least 10 wt%, preferably at least 14 wt%, more preferably at least 18 wt% of said ion-conducting polymeric material in said solvent formulation. The solvent formulation may include less than 30 wt% or less than 25 wt% of said ion-conducting polymeric material. However, a solvent formulation which is more concentrated in said ion-conducting polymeric material may be prepared by removing, for example evaporating, some of the water in the solvent formulation which includes a major amount of water. In this event, said solvent formulation which includes a major amount of water may include at least 30 wt%, at least 40 wt% or even 50 wt% of said ion-conducting polymeric material.

Said ion-conducting polymeric material may include

a moiety of formula

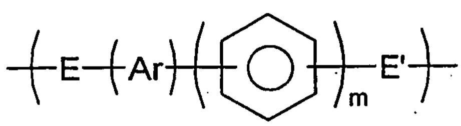

I

and/or a moiety of formula

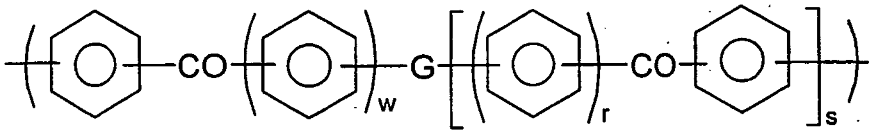 II

and/or a moiety of formula

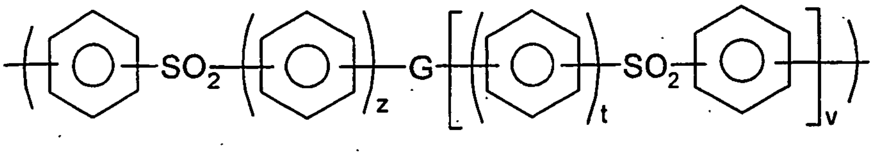 III

wherein at least some of the units I, II and/or III are functionalised to provide ion-exchange sites, wherein the phenyl moieties in units I, II, and III are independently optionally substituted and optionally cross-linked; and wherein m,r,s,t,v, w and z independently represent zero or a positive integer, E and E' independently represent an oxygen or a sulphur atom or a direct link, G represents an oxygen or sulphur atom, a direct link or a -O-Ph-O- moiety where Ph represents a phenyl group and Ar is selected from one of the following moieties (i)* or (i) to (x) which is bonded via one or more of its phenyl moieties to adjacent moieties

(i)* 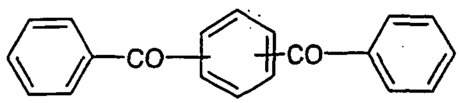

(i) 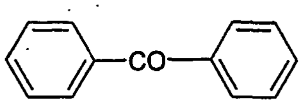 (ii) 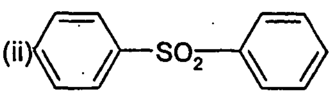

(iii) 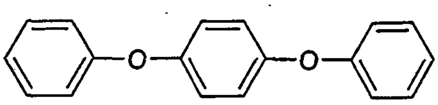 (iv) 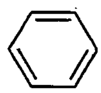

(v) 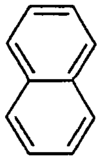 (vi) 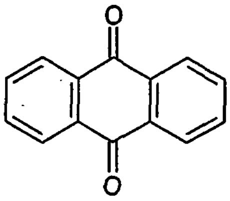 (vii) 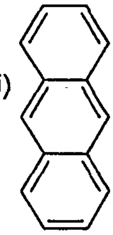

(viii) 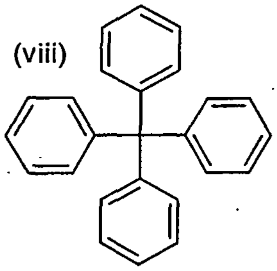 (ix) 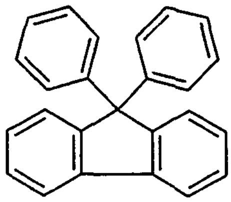 (x) 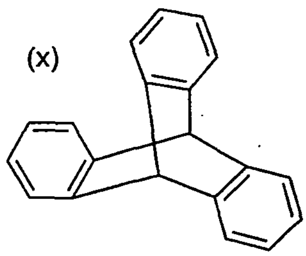

Unless otherwise stated in this specification, a phenyl moiety may have 1,4- or 1,3-, especially 1,4-, linkages to moieties to which it is bonded.

In (i)*, the middle phenyl may be 1,4- or 1,3- substituted.

Suitably, to provide said ion exchange sites, said polymeric material is sulphonated, phosphorylated, carboxylated, quaternary-aminoalkylated or chloromethylated, and optionally further modified to yield $-CH_2PO_3H_2$, $-CH_2NR_3^{20+}$ where $R^{20}$ is an alkyl, or $-CH_2NAr_3^{x+}$ where $Ar^x$ is an aromatic (arene), to provide a cation or anion exchange membrane. Further still, the aromatic moiety may contain a hydroxyl group which can be readily elaborated by existing methods to generate $-OSO_3H$ and $-OPO_3H_2$ cationic exchange sites on the polymer. Ion exchange sites of the type stated may be provided as described in WO95/08581.

Preferably, said polymeric material is sulphonated. Preferably, the only ion-exchange sites of said polymeric material are sites which are sulphonated.

References to sulphonation include a reference to substitution with a group $-SO_3M$ wherein M stands for one or more elements selected with due consideration to ionic valencies from the following group: H, $NR_4^{y+}$, in which $R^y$ stands for H, $C_1$-$C_4$ alkyl, or an alkali or alkaline earth metal or a metal of sub-group 8, preferably H, $NR_4^+$, Na, K, Ca, Mg, Fe, and Pt. Preferably M represents H. Sulphonation of the type stated may be provided as described in WO96/29360.

Said polymeric material may include more than one different type of repeat unit of formula I; more than one different type of repeat unit of formula II; and more than one different type of repeat unit of formula III.

Said moieties I, II and III are suitably repeat units. In the polymeric material, units I, II and/or III are suitably bonded to one another - that is, with no other atoms or groups being bonded between units I, II, and III.

Where the phenyl moieties in units I, II or III are optionally substituted, they may be optionally substituted by one or more halogen, especially fluorine and chlorine, atoms or alkyl, cycloalkyl or phenyl groups. Preferred alkyl groups are $C_{1-10}$, especially $C_{1-4}$, alkyl groups. Preferred cycloalkyl groups include cyclohexyl and multicyclic groups, for example adamantyl. In some cases, the optional substituents may be used in the cross-linking of the polymer. For example, hydrocarbon optional substituents may be functionalised, for example sulphonated, to allow a cross-linking reaction to take place. Preferably, said phenyl moieties are unsubstituted.

Another group of optional substituents of the phenyl moieties in units I, II or III include alkyls, halogens, $C_yF_{2y+1}$ where y is an integer greater than zero, O-$R^q$ (where $R^q$ is selected from the group consisting of alkyls, perfluoralkyls and aryls), $CF=CF_2$, CN, $NO_2$ and OH. Trifluormethylated phenyl moieties may be preferred in.some circumstances.

Where said polymeric material is cross-linked, it is suitably cross-linked so as to improve its properties as a polymer electrolyte membrane, for example to reduce its swellability in water. Any suitable means may be used to effect cross-linking. For example, where E represents a sulphur atom, cross-linking between polymer chains may be effected via sulphur atoms on respective chains. Alternatively, said polymer may be cross-linked via sulphonamide bridges as described in US 5 561 202. A further alternative is to effect cross-linking as described in EP-A-0008895.

Where w and/or z is/are greater than zero, the respective phenylene moieties may independently have 1,4- or

1,3-linkages to the other moieties in the repeat units of formulae II and/or III. Preferably, said phenylene moieties have 1,4- linkages.

Preferably, the polymeric chain of the first material does not include a -S- moiety. Preferably, G represents a direct link.

Suitably, "a" represents the mole % of units of formula I in said polymeric material, suitably wherein each unit I is the same; "b" represents the mole % of units of formula II in said material, suitably wherein each unit II is the same; and "c" represents the mole % of units of formula III in said material, suitably wherein each unit III is the same. Preferably, a is in the range 45-100, more preferably in the range 45-55, especially in the range 48-52. Preferably, the sum of b and c is in the range 0-55, more preferably in the range 45-55, especially in the range 48-52. Preferably, the ratio of a to the sum of b and c is in the range 0.9 to 1.1 and, more preferably, is about 1. Suitably, the sum of a, b and c is at least 90, preferably at least 95, more preferably at least 99, especially about 100. Preferably, said polymeric material consists essentially of moieties I, II and/or III.

Said polymeric material may be a homopolymer having a repeat unit of general-formula

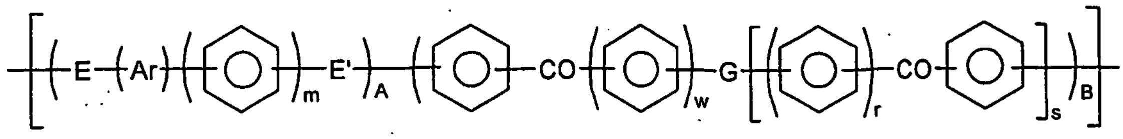

IV

or a homopolymer having a repeat unit of general formula

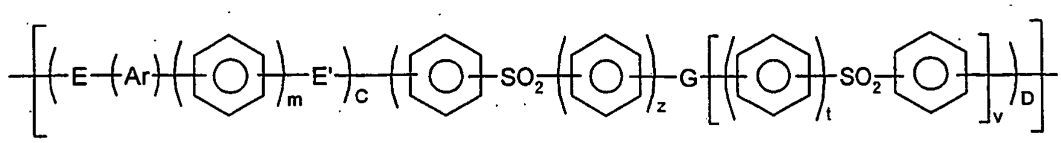

V

or a random or block copolymer of at least two different units of IV and/or V provided that repeat units (or parts of repeat unit) are functionalised to provide ion-exchange sites;
wherein A, B, C and D independently represent 0 or 1 and E,E',G,Ar,m,r,s,t,v,w and z are as described in any statement herein.

As an alternative to a polymer comprising units IV and/or V discussed above, said polymeric material may be a homopolymer having a repeat unit of general formula

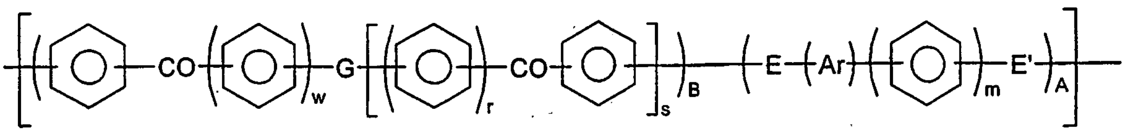

IV*

or a homopolymer having a repeat unit of general formula

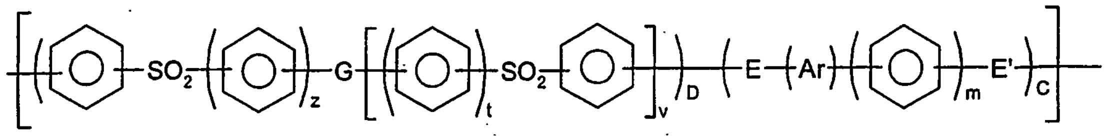

V*

or a random or block copolymer of at least two different units of IV* and/or V* provided that repeat units (or parts of repeat units) are functionalised to provide ion-exchange sites; wherein A, B, C, and D independently represent 0 or 1 and E, E', G, Ar, m, r, s, t, v, w and z are as described in any statement herein.

Preferably, m is in the range 0-3, more preferably 0-2, especially 0-1. Preferably, r is in the range 0-3, more preferably 0-2, especially 0-1. Preferably t is in the range 0-3, more preferably 0-2, especially 0-1. Preferably, s is 0 or

1. Preferably v is 0 or 1. Preferably, w is 0 or 1. Preferably z is 0 or 1.

Preferably Ar is selected from the following moieties (xi)* and (xi) to (xxi) :

(xi)* 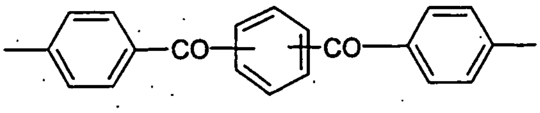

(xi) 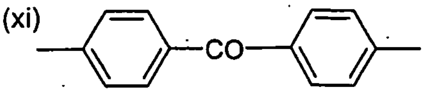 (xii) 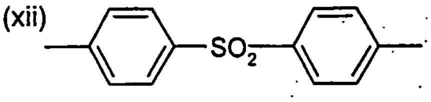

(xiii) 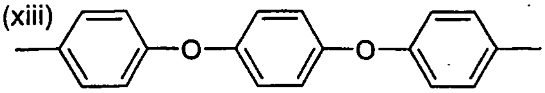 (xiv) 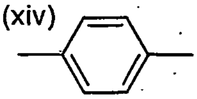

(xv) 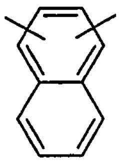 (xvi) 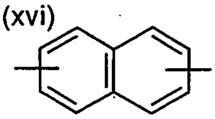 (xvii) 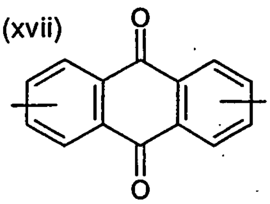

(xviii) 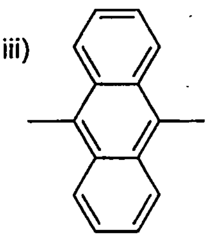 (xix) 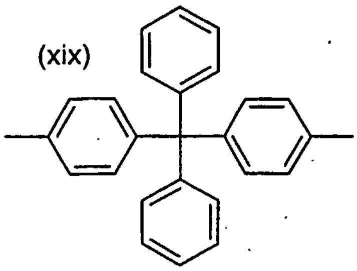

(xxi)

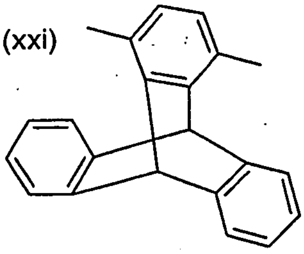

(xx)

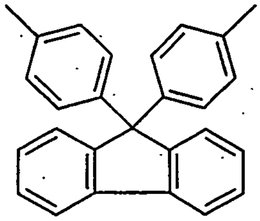

In (xi)*, the middle phenyl may be 1,4- or 1,3-substituted.
Preferably, (xv) is selected from a 1,2-, 1,3-, or a 1,5-moiety; (xvi) is selected from a 1,6-, 2,3-, 2,6- or a 2,7-moiety; and (xvii) is selected from a 1,2-, 1,4-, 1,5-, 1,8- or a 2,6- moiety.
Unless otherwise stated in this specification, a reference to a crystalline material extends to any material having at least some crystallinity.
The existence and/or extent of crystallinity in a polymer is preferably measured by wide angle X-ray diffraction, for example as described by Blundell and Osborn (Polymer 24, 953, 1983). Alternatively, Differential Scanning Calorimetry (DSC) could be used to assess crystallinity. The level of crystallinity in said polymeric material may be 0% (e.g. where the material is amorphous or crystallisable); or the level of crystallinity may be at least 0.5%, suitably at least 1%, preferably at least 5% weight fraction, suitably when measured as described by Blundell and Osborn. The level of crystallinity in said polymeric material may be less than 20%.
Suitable moieties Ar are moieties (i)*, (i), (ii), (iv) and (v) and, of these, moieties (i)*, (i), (ii) and (iv) are preferred. Preferred moieties Ar are moieties (xi)*, (xi), (xii), (xiv), (xv) and (xvi) and, of these, moieties (xi)*, (xi), (xii) and (xiv) are especially preferred. Another preferred moiety is moiety (v), especially, moiety (xvi). In relation, in particular to the alternative first polymeric materials comprising units IV* and/or V*, preferred Ar moieties are (v) and, especially, (xvi).
One preferred class of polymeric materials may include at least some ketone moieties in the polymeric chain. In such a preferred class, the polymer preferably does not only include -O- and $-SO_2-$ moieties between aryl (or other unsaturated) moieties in the polymeric chain. Thus, in this case, suitably, a polymer of the first aspect does not consist only of moieties of formula III, but also includes moieties of formula I and/or II.
Preferred polymeric materials include -ether-biphenyl-ether-phenyl-ketone- units. Preferred polymeric materials may additionally include -ether-phenyl-sulphone-phenylether-phenyl-ketone- units. Optionally, preferred polymeric materials may include -ether-phenyl-sulphone-phenyl-ether-ph.enyl-ketone- units.
Where a phenyl group is sulphonated, it may be monosulphonated.
The glass transition temperature (Tg) of said ion-conducting polymeric material may be at least 144°C, suitably at least 150°C, preferably at least 154°C, more preferably at least 160°C, especially at least 164°C. In some cases, the Tg may be at least 170°C, or at least 190°C or greater than 250°C or even 300°C.
Said polymeric material may have an inherent viscosity (IV) of at least 0.1, suitably at least 0.3, preferably at least 0.4, more preferably at least 0.6, especially at least 0.7 (which corresponds to a reduced viscosity (RV) of least 0.8) wherein RV is measured at 25°C on a solution of the polymer in concentrated sulphuric acid of density $1.84gcm^{-3}$, said solution containing 1g of polymer per $100cm^{-3}$ of solution. IV is measured at 25°C on a solution of polymer in concentrated sulphuric acid of density $1.84gcm^3$, said solution containing 0.1g of polymer per $100cm^3$ of solution. The measurements of both RV and IV both suitably employ a viscometer having a solvent flow time of approximately 2 minutes.
The equivalent weight (EW) of said ion-conductive polymeric material is preferably less than 850g/mol, more preferably less than 800g/mol, especially less than 750g/mol. The EW may be greater than 300, 400 or 500 g/mol.
The boiling water uptake of ion-conductive polymeric material measured as described hereinafter is suitably less than 350%, preferably less than 300%, more preferably less than 250%.
The main peak of the melting endotherm (Tm) for said first polymeric material may be at least 300°C.
According to a second aspect of the invention, there is provided a polymeric material containing formulation (hereinafter "said pmc formulation") which comprises an ion-conducting polymeric material dissolved and/or dispersed in a solvent formulation wherein:

(a) said ion-conducting polymeric material includes:

(i) phenyl moieties;
(ii) carbonyl and/or sulphone moieties; and

(iii) ether and/or thioether moieties; and

(b) greater than 95 wt% of said solvent formulation is made up of water.

Suitably, at least 55 wt%, preferably at least 60 wt%, of said solvent formulation is made up of water. In embodiments wherein a. second organic solvent is included in said solvent mixture, said pmc formulation may include a second organic solvent as described above. Said solvent formulation of said second aspect may include 0-40 wt% of said second solvent formulation. In preferred embodiments at least 95 wt%, especially at least 99 wt% of said solvent formulation of the second aspect is made up of water. In especially preferred embodiments, said solvent formulation consists essentially of water.

Said pmc formulation may include at least 1 wt%, suitably at least 3 wt%, preferably at least 7 wt%, more preferably at least 9 wt% of said ion-conducting polymeric material (or if more than one type of polymeric material is included, the total amount of polymeric materials may be as aforesaid). In some situations, said pmc formulation may include greater than 30 wt%, or even greater than 40 wt% of said polymeric material(s).

The pmc formulation is preferably a stable solution/dispersion - that is, the polymeric material does not substantially precipitate over time.

According to a third aspect of the present invention, there is provided a method of fabricating an article, the method including the step of contacting a member with a formulation according to the first or second aspects. The method may be used to deposit the polymeric material on said member. For example, said member may be a support which may be contacted with said formulation in order to prepare a membrane; or said support may be coated with said formulation and/or said ion-conducting polymeric material in order to prepare an article which comprises said member and a coating prepared as described.

The method of the third aspect may be used in fabricating a wide range of types of articles. In one embodiment, said formulation may be used to impregnate a said member, for example a fibre or fabric. In this event, said solvent mixture may not include a said second organic solvent as described above. In another embodiment, said formulation may be used to form a film in which case, said solvent mixture may include a said second organic solvent. In either case, the method may be advantageous since said solvent mixture includes a major amount of water, rather than a major amount of organic solvent and is consequently easier to handle. Furthermore, it is found that a formulation according to the first or second aspects may include a relatively high concentration of said polymeric material (eg greater than 50 wt%) and, therefore, removal of solvents from the formulation after contact with said member may require less energy.

Any feature of any aspect of any invention or embodiment described herein may be combined with any feature of any aspect of any other invention or embodiment described herein mutatis mutandis.

Specific embodiments of the invention will now be described, by way of example, with reference to figure 1 which is a schematic representation of a polymer electrolyte membrane fuel cell.

Example 1a

A 700ml flanged flask fitted with a ground glass Quickfit lid, stirrer/stirrer guide, nitrogen inlet and outlet was charged with 4,4'-difluorobenzophenone (89.03g, 0.408 mole, mole ratio = 1.02), 4,4'-dihydroxybiphenyl (24.83g, 0.133 mole, mole ratio = 0.33), 4,4'-dihydroxydiphenylsulphone (53.65g, 0.213 mole, mole ratio = 0.536), 4,4'-dihydroxybenzophenone (11.37g, 0.053 mole, mole ratio = 0.134) and diphenysulphone (332g) and purged with nitrogen for over 1 hour. The contents were then heated under a nitrogen blanket to between 140 and 150°C to form an almost colourless solution. While maintaining a nitrogen blanket, dried sodium carbonate (43.24g, 0.408 mole) was added. The temperature was raised gradually to 320°C over 3 hours then maintained for 1.5 hours.

The reaction mixture was allowed to cool, milled and washed with acetone and water. The resulting polymer was dried in an air oven at 120°C. The polymer had a melt viscosity at 400°C, 1000sec$^{-1}$ of 0.34 kNsm$^{-2}$.

Example 2a

A 700ml flanged flask fitted with a ground glass Quickfit lid, stirrer/stirrer guide, nitrogen inlet and outlet was charged with 4,4'-difluorobenzophenone (89.03g, 0.408 mole, mole ratio = 1.02), 4,4'-dihydroxybiphenyl, (24.93g, 0.133 mole, mole ratio = 0.33), 4,4'-dihydroxydiphenylsulphone (66.73g, 0.267 mole, mole ratio = 0.67) and diphenysulphone (332g) and purged with nitrogen for over 1 hour. The contents were then heated under a nitrogen blanket to between 140 and 150°C to form an almost colourless solution. While maintaining a nitrogen blanket, dried sodium carbonate (42.44g, 0.40 mole) and potassium carbonate (1.11g, 0.008 mole) were added. The temperature was raised gradually to 315°C over 3 hours then maintained for 0.5 hours.

The reaction mixture was allowed to cool, milled and washed with acetone and water. The resulting polymer was dried in an air oven at 120°C. The polymer had a melt viscosity at 400°C, 1000sec$^{-1}$ of 0.28 kNsm$^{-2}$.

By processes analogous to Examples 1a and 2a, further materials were prepared. A summary of the examples including mole ratios used in the preparations and Melt viscosities (MV) achieved are provided in Table A below, wherein the following abbreviations are used:

BDF 4,4'-difluorobenzophenone
BP 4,4'-dihydroxybiphenyl
DHB 4,4'-dihydroxybenzophenone
Bis-S 4,4'-dihydroxydiphenylsulphone

TABLE A

| Polymer | Polymer Composition (mole ratio) | | | | MV $KNsm^{-2}$ |
|---|---|---|---|---|---|
| | BDF | BP | DHB | Bis-S | |
| 1a | 1.02 | 0.33 | 0.134 | 0.536 | 0.34 |
| 1b | 1.02 | 0.33 | 0.134 | 0.536 | 0.61 |
| 2a | 1.02 | 0.33 | - | 0.67 | 0.28 |
| 2b | 1.02 | 0.33 | - | 0.67 | 0.40 |

Example 3 - Sulphonation of polymers

The polymers of Examples 1 and 2 were sulphonated by stirring each polymer in 98% sulphuric acid (3.84g polymer/100g sulphuric acid) for 21 hours at 50°C. Thereafter, the reaction solution was allowed to drip into stirred deionised water. Sulphonated polymer precipitated as free-flowing beads. Recovery was by filtration, followed by washing with deionised.water until the pH was neutral and subsequent drying. In general, titration confirmed that 100 mole% of the biphenyl units had sulphonated, giving one sulphonic acid group, ortho to the ether linkage, on each of the two aromatic rings comprising the biphenyl unit.

Example 4 - Membrane fabrication using NMP

Membranes were produced from the polymers of Examples 1 and 2 after sulphonation as described in Example 3 by dissolution of the sulphonated polymers in NMP (N-methylpyrrolidone) to form homogenous solutions, casting the solutions onto clear glass plates followed by drawing down, using a Gardner knife, to give 400 micron films. The NMP was then evaporated.

Example 5 - Boiling Water Uptake

The following general procedure was followed to determine the Boiling Water Uptake of the membranes prepared.

5cm x 5cm samples of membranes were selected. The thickness of the samples was related to the concentration of polymers in the solvent systems used to cast the membranes. The membranes were separately immersed in boiling deionised water (500ml) for 60 mins, removed and dried quickly with lint-free paper to remove surface water, weighed, dried in an oven at 50°C for 1 day, allowed to cool to ambient temperature in a desiccator then weighed quickly. The % water-uptake was calculated as described below:

$$\%\ \text{Water-uptake} = \frac{\text{Wet Weight} - \text{Dry Weight}}{\text{Dry Weight}} \times 100$$

Table B below provides results for the polymers of Examples 1 and 2 when fabricated as described in Example 4. EW refers to the "equivalent weight".

TABLE B

| Sulphonated Polymer from | EW Theoretical | EW Actual | Boiling Water Uptake (%) |
|---|---|---|---|
| 1a | 683 | 677 | 143 |
| 1b | 683 | 683 | 128 |
| 2a | 690 | 694 | 140 |
| 2b | 690 | 699 | 144 |

Example 6 - Membrane fabrication using water-based solvent formulations

Membranes were produced as described in Example 4, except that the sulphonated polymers were dissolved in a 50:50 mixture of acetone/water including 5 wt% NMP, at a sulphonated polymer concentration of 10 wt%. Dissolution may be undertaken at any temperature between ambient temperature and the boiling point of the solvent mixture. The falling ball viscosity of the above solutions was measured at 23°C using a Gilmont (Trade Mark). Instruments Falling Ball Viscometer using a stainless steel ball. Results for each solution, together with values for the boiling water uptake, measured as described in Example 5, are provided in Table C below.

TABLE C

| Sulphonated Polymer from | Falling Ball Viscosity (cP) | Boiling Water Uptake (%) |
|---|---|---|
| 1a | 892 | 106 |
| 1b | 1227 | 102 |
| 2a | 174 | 140 |
| 2b | 417 | 147 |

Example 7 - Preparation of dispersions of sulphonated polymers in water and membrane fabrication

Example 7(a)

The sulphonated polymers were each dissolved in a 50:50 mixture of acetone and water and, subsequently, the acetone was removed using a rotary evaporator under reduced pressure (20mm Hg/40°C), leaving approximately 20 wt% sulphonated polymer in water. The formulation produced is probably not a true solution but is more likely a very fine dispersion of the sulphonated polymer in water. The dispersions had very low viscosities and membranes cast therefrom tended to be brittle. However, the formulations could be used to impregnate fibres or fabrics and this may be facilitated by their low viscosities. Table D details the viscosity "before evaporation" for the formulations.

Example 7(b)

The procedure of Example 7(a) was followed except that, after removal of the acetone, some of the water was removed by using a rotary evaporator (20mm Hg/70°C) to produce more concentrated solutions (up to 50 wt% of sulphonated polymer in water). The formulation could be used to produce membranes. Table D details the viscosity of the formulations "after evaporation" of water, together with the "final concentration" of sulphonated polymer.

TABLE D

| Sulphonated polymer from | Falling ball viscosity (cP) | | Final conc. Of sulphonated polymer (% w/w) |
|---|---|---|---|
| | Before evaporation | After evaporation | |
| 1a | 82 | 282 | 36 |
| 1b | 23 | 314 | 49 |
| 2a | 18 | 480 | 54 |
| 2b | 21 | 680 | 53 |

Example 7(c)

The procedure of Example 7(b) was followed, except that a coalescing agent (NMP or ethylene glycol) was added as detailed in Table E to facilitate preparation of membranes. Membranes were prepared and boiling water uptakes (%) determined as described above. Results are provided in Table E below.

TABLE E

| Sulphonated Polymer from | EW Theoretical | EW Actual | Amount NMP (wt%) | Final conc. of sulphonate d polymer (%w/w) | Boiling Water Uptake (%) |
|---|---|---|---|---|---|
| 1a | 683 | 691 | 10 | 32 | 106 |
| 1b | 683 | 701 | 15 | 42 | 102 |
| 2a | 690 | 710 | 15 | 46 | 135 |
| 2b | 690 | 709 | 15 | 45 | 158 |

It should be appreciated from Table E that no increase in EW is observed, suggesting the procedure described does not cause a loss of sulphonic acid groups.

Example 8 - Membrane fabrication using water-based solvent formulations

Membranes were produced as described in Example 4, except that the sulphonated polymers were dissolved in a 50:50 mixture of THF/water including 5 wt% NMP, at a sulphonated polymer concentration of 10 wt%. The values for the boiling water uptake measured as described in Example 5, are provided in Table F below. The falling ball viscosity of the above solutions were measured at 23°C using a Gilmont® Instruments Falling Ball Viscometer using a stainless steel ball.

TABLE F

| Sulphonated Polymer from | Falling Ball Viscosity (cP) | Boiling Water Uptake (%) |
|---|---|---|
| 1a | 1034 | 109 |
| 2a | 4964 | 136 |

Example 9 - Preparation of dispersions of sulphonated polymers in water and membrane fabrication

Example 9(a)

The sulphonated polymers were each dissolved in a 50:50 mixture of THF and water and, subsequently, the THF was removed using a rotary evaporator under reduced pressure (20mm Hg/40°C), leaving approximately 17 wt% sulphonated polymer in water. The formulation produced is probably not a true solution but is more likely a very fine dispersion of the sulphonated polymer in water. The dispersion had very low viscosity and membranes cast therefrom tended to be brittle. The aqueous solutions/dispersions could be used to impregnate fibres of fabrics. Table G details the viscosity "before evaporation" for the formulations.

Example 9 (b)

The procedure of Example 9 (a) was followed except that, after removal of the THF, some of the water was removed by using a rotary evaporator (20mm Hg/70°C) to produce more concentrated solutions. The formulation could be used to produce membranes. Table G details the viscosity of the formulations "after evaporation" of water, together with the concentration of sulphonated polymer.

TABLE G

| Sulphonated polymer from | Falling ball viscosity (cP) | | Sulphonated polymer conc. (% w/w) |
|---|---|---|---|
| | Before evaporation | After evaporation | |
| 1a | 50 | 104 | 22 |
| 2a | 800 | 1068 | 21 |

Example 9(c)

The procedure of Example 9(b) was followed, except that a coalescing agent (NMP or ethylene glycol) was added to facilitate preparation of membranes. Membranes were prepared and boiling water uptakes (%) determined as described above. Results are provided in Table H below.

Table H

| Sulphonated Polymer from | Boiling Water Uptake (%) | Final Sulphonated Polymer conc. (% w/w) |
|---|---|---|
| 1b | 98 | 20.9 |
| 2a | 123 | 20 |

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

**1.** A method of preparing a formulation comprising an ion-conducting polymeric material, the method comprising:

(a) selecting an ion-conducting polymeric material of a type which includes:

(i) phenyl moieties;
(ii) carbonyl and/or sulphone moieties; and
(iii) ether and/or thioether moieties;

(b) selecting a solvent mixture comprising water and a first organic solvent in which mixture said ion-conducting polymeric material can be dissolved and/or dispersed;
(c) dissolving and/or dispersing said ion-conducting polymeric material in said solvent mixture;
(d) removing greater than 80% of the total amount of said first organic solvent in said solvent mixture, thereby to leave a formulation comprising said ion-conducting polymeric material dissolved and/or dispersed in a solvent formulation comprising a major amount of water.

**2.** A method according to claim 1, wherein said first organic solvent selected in step (b) is water miscible at 25°C and has a boiling point of less than that of water.

**3.** A method according to claim 1 or claim 2, wherein said first organic solvent has up to 5 carbon atoms.

**4.** A method according to any preceding claim, wherein said first organic solvent includes an hydroxyl, ether or carbonyl functional group.

**5.** A method according to any preceding claim, wherein said first organic solvent is selected from acetone, methylethylketone, ethanol and tetrahydrofuran.

**6.** A method according to any preceding claim, wherein said solvent mixture includes an optional second organic solvent having a boiling point which is greater than that of said first organic solvent.

**7.** A method according to claim 6, wherein said second organic solvent has a boiling point at atmospheric pressure which is at least 20°C greater than the boiling point of said first organic solvent.

**8.** A method according to any preceding claim, wherein the ratio of the wt% of water to the wt% of said first organic solvent is in the range 0.25 to 2.5.

**9.** A method according to any preceding claim, wherein said solvent mixture of step (c) includes at least 1wt% and less than 20wt% of said ion-conducting polymeric material.

**10.** A method according to any preceding claim, wherein step (c) of the method is carried out at a temperature which is less than the boiling point of the solvent mixture.

**11.** A method according to any preceding claim, wherein after removal of the first organic solvent the solvent formulation which includes a major amount of water includes at least 10wt% and less than 30wt% of said ion-conducting polymeric material.

**12.** A method according to any preceding claim, wherein said ion-conducting polymeric material includes:

a moiety of formula

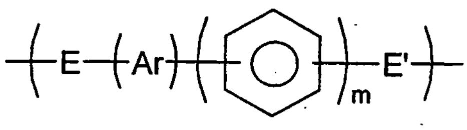

I

and/or a moiety of formula

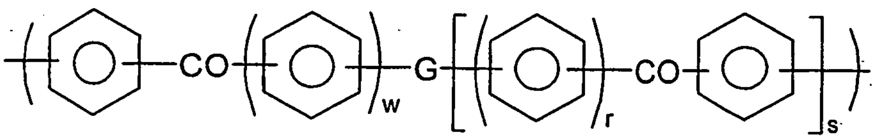

II

and/or a moiety of formula

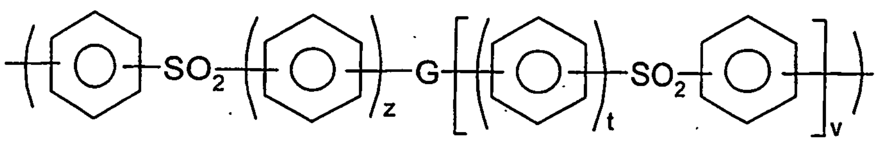

III

wherein at least some of the units I, II and/or III are functionalised to provide ion-exchange sites, wherein the phenyl moieties in units I, II, and III are independently optionally substituted and optionally cross-linked; and wherein m,r,s,t,v,w and z independently represent zero or a positive integer, E and E' independently represent an oxygen or a sulphur atom or a direct link, G represents an oxygen or sulphur atom, a.direct link or a -O-Ph-O- moiety

where Ph represents a phenyl group and Ar is selected from one of the following moieties (i)* or (i) to (x) which is bonded via one or more of its phenyl moieties to adjacent moieties

(i)* 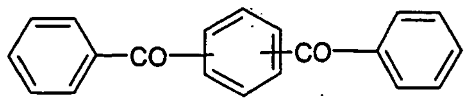

(i) 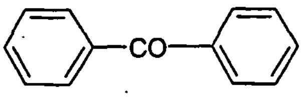

(ii) 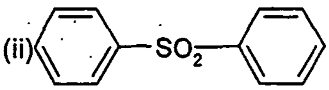

(iii) 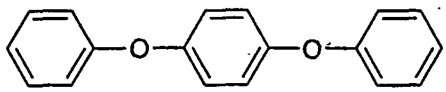

(iv) 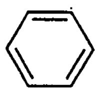

(v) 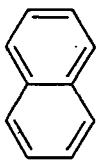

(vi) 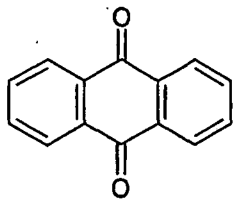

(vii) 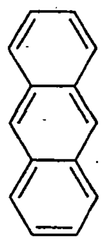

(viii) 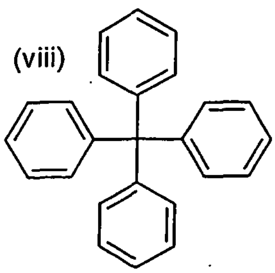

(ix) 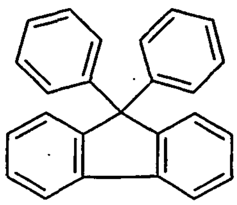

(x) 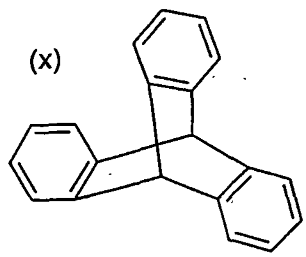

**13.** A method according to any preceding claim, wherein said polymeric material is sulphonated.

**14.** A method according to any preceding claim, wherein said polymeric material is a homopolymer having a repeat unit of general formula

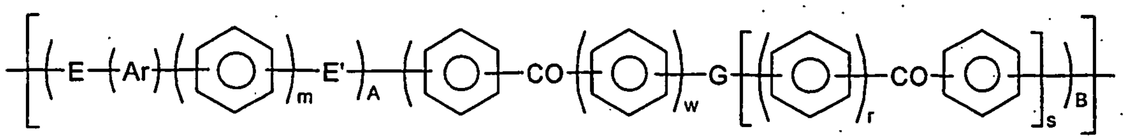

IV

or a homopolymer having a repeat unit of general formula

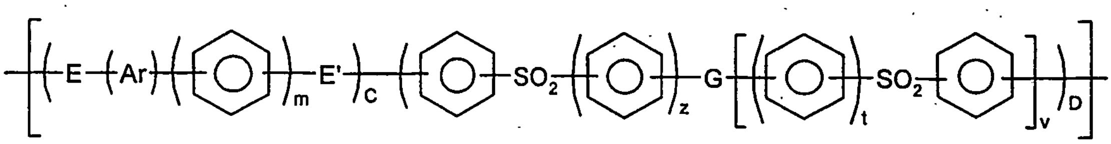

V

or a random or block copolymer of at least two different units of IV and/or V provided that repeat units (or parts of repeat unit) are functionalised to provide ion-exchange sites;
or a homopolymer having a repeat unit of general formula

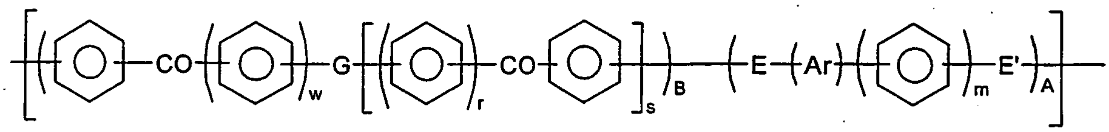

IV*

or a homopolymer having a repeat unit of general formula

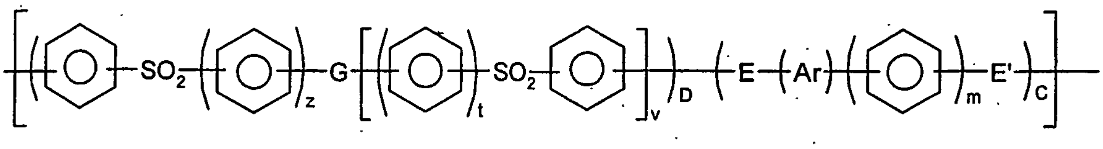

V*

or a random or block copolymer of at least two different units of IV* and/or V* provided that repeat units (or parts of repeat units) are functionalised to provide ion-exchange sites;
wherein A, B, C, and D independently represent 0 or 1 and E, E', G, Ar, m, r, s, t, v, w and z are as described in claim 12.

**15.** A method according to any preceding claim, wherein said ion-conducting polymeric material includes at least some ketone moieties in the polymeric chain.

**16.** A method according to any preceding claim, wherein said ion-conducting polymeric material includes -ether-biphenyl-ether-phenyl-ketone-units.

**17.** A polymeric material containing formulation (hereinafter "said pmc formulation") which comprises an ion-conducting polymeric material dissolved and/or dispersed in a solvent formulation wherein:

(a) said ion-conducting polymeric material includes:

(i) phenyl moieties;
(ii) carbonyl and/or sulphone moieties; and
(iii) ether and/or thioether moieties; and

(b) greater than 95 wt% of said solvent formulation is made up of water.

**18.** A polymeric material according to claim 17, wherein said PMC formulation includes at least 9wt% of said ion-conducting polymeric material.

**19.** A method of fabricating an article, the method including the step of contacting a member with a formulation as described in any preceding claim.

**20.** A method according to claim 19, which is used to deposit the polymeric material on said member.

**Patentansprüche**

**1.** Verfahren zum Herstellen einer Formulierung, umfassend ein ionenleitfähiges Polymermaterial, wobei das Verfahren umfasst:

(a) Auswählen eines ionenleitfähigen Polymermaterials eines Typs, welcher umfasst:

(i) Phenyleinheiten;
(ii) Carbonyl- und/oder Sulfoneinheiten; und
(iii) Ether- und/oder Thioethereinheiten;

(b) Auswählen eines Lösungsmittelgemisches, umfassend Wasser und ein erstes organisches Lösungsmittel, wobei das ionenleitfähige Polymermaterial in diesem Gemisch gelöst und/oder dispergiert werden kann;
(c) Lösen und/oder Dispergieren des ionenleitfähigen Polymermaterials in dem Lösungsmittelgemisch;
(d) Entfernen von mehr als 80 % der Gesamtmenge des ersten organischen Lösungsmittels in dem Lösungsmittelgemisch, um **dadurch** eine Formulierung zu hinterlassen, die das ionenleitfähige Polymermaterial in einer Lösungsmittelformulierung gelöst und/oder dispergiert umfasst, die eine größere Menge an Wasser umfasst.

**2.** Verfahren nach Anspruch 1, wobei das in Schritt (b) ausgewählte erste organische Lösungsmittel bei 25°C mit Wasser mischbar ist und einen Siedepunkt aufweist, der niedriger ist als der von Wasser.

**3.** Verfahren nach Anspruch 1 oder Anspruch 2, wobei das erste organische Lösungsmittel bis zu 5 Kohlenstoffatome aufweist.

**4.** Verfahren nach einem der vorangehenden Ansprüche, wobei das erste organische Lösungsmittel eine funktionelle Hydroxyl-, Ether- oder Carbonylgruppe umfasst.

**5.** Verfahren nach einem der vorangehenden Ansprüche, wobei das erste organische Lösungsmittel ausgewählt ist aus Aceton, Methylethylketon, Ethanol und Tetrahydrofuran.

**6.** Verfahren nach einem der vorangehenden Ansprüche, wobei das Lösungsmittelgemisch ein optionales zweites organisches Lösungsmittel mit einem Siedepunkt umfasst, welcher höher ist als der des ersten organischen Lösungsmittels.

**7.** Verfahren nach Anspruch 6, wobei das zweite organische Lösungsmittel einen Siedepunkt bei Atmosphärendruck aufweist, welcher wenigstens 20°C höher ist als der Siedepunkt des ersten organischen Lösungsmittels.

**8.** Verfahren nach einem der vorangehenden Ansprüche, wobei das Verhältnis der Gew.-% Wasser zu den Gew.-% des ersten organischen Lösungsmittels im Bereich 0,25 bis 2,5 liegt.

**9.** Verfahren nach einem der vorangehenden Ansprüche, wobei das Lösungsmittelgemisch von Schritt (c) wenigstens 1 Gew.-% und weniger als 20 Gew.-% des ionenleitfähigen Polymermaterials umfasst.

**10.** Verfahren nach einem der vorangehenden Ansprüche, wobei Schritt (c) des Verfahrens bei einer Temperatur durchgeführt wird, die niedriger ist als der Siedepunkt des Lösungsmittelgemisches.

**11.** Verfahren nach einem der vorangehenden Ansprüche, wobei nach dem Entfernen des ersten organischen Lösungsmittels die Lösungsmittelformulierung, welche eine größere Menge an Wasser umfasst, wenigstens 10 Gew.-% und weniger als 30 Gew.-% des ionenleitfähigen Polymermaterials umfasst.

**12.** Verfahren nach einem der vorangehenden Ansprüche, wobei das ionenleitfähige Polymermaterial umfasst:

eine Einheit der Formel

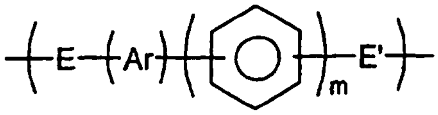 I

und/oder eine Einheit der Formel

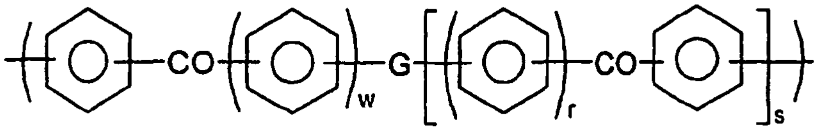 II

und/oder eine Einheit der Formel

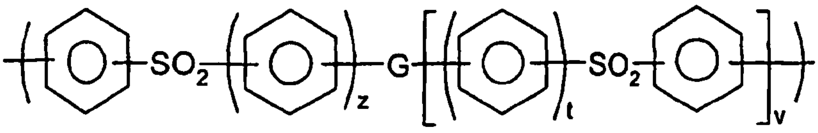 III

worin wenigstens einige der Einheiten I, II und/oder III funktionalisiert sind, um Ionenaustauschstellen bereitzustellen, wobei die Phenyleinheiten in den Einheiten I, II und III unabhängig voneinander optional substituiert und optional vernetzt sind; und wobei m, r, s, t, v, w und z unabhängig voneinander null oder eine positive ganze Zahl bedeuten, E und E' unabhängig voneinander ein Sauerstoff- oder ein Schwefelatom oder eine direkte Bindung bedeuten, G ein Sauerstoff- oder Schwefelatom, eine direkte Bindung oder eine -O-Ph-O- Einheit bedeutet, wobei Ph eine Phenylgruppe bedeutet und Ar ausgewählt ist aus einer der folgenden Einheiten (i)* oder (i) bis (x), welche über eine oder mehrere ihrer Phenyleinheiten an angrenzende Einheiten gebunden ist

(i)* 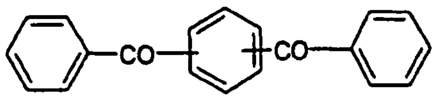

(i) 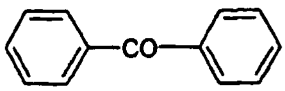 (ii) 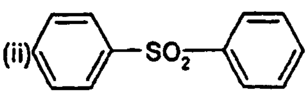

(iii) 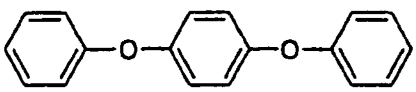 (iv) 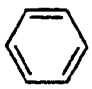

(v) 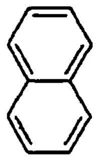 (vi) 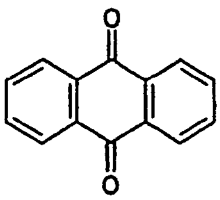 (vii) 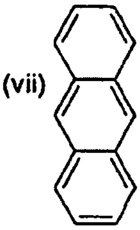

(viii) 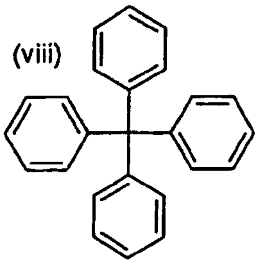 (ix) 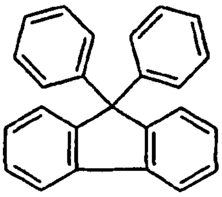 (x) 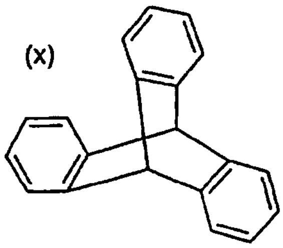

**13.** Verfahren nach einem der vorangehenden Ansprüche, wobei das Polymermaterial sulfoniert ist.

**14.** Verfahren nach einem der vorangehenden Ansprüche, wobei das Polymermaterial ein Homopolymer mit einer Wiederholungseinheit der allgemeinen Formel

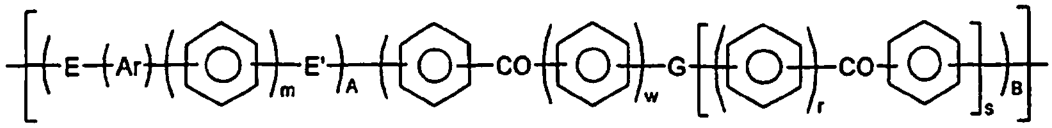 IV

oder ein Homopolymer mit einer Wiederholungseinheit der allgemeinen Formel

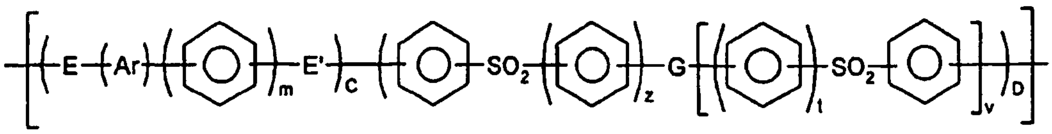 V

oder ein statistisches oder Blockcopolymer von wenigstens zwei unterschiedlichen Einheiten von IV und/oder V ist, mit der Maßgabe, dass Wiederholungseinheiten (oder Teile einer Wiederholungseinheit) funktionalisiert sind, um Ionenaustauschstellen bereitzustellen;
oder ein Homopolymer mit einer Wiederholungseinheit der allgemeinen Formel

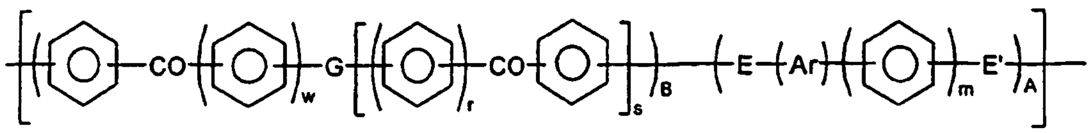 IV*

oder ein Homopolymer mit einer Wiederholungseinheit der allgemeinen Formel

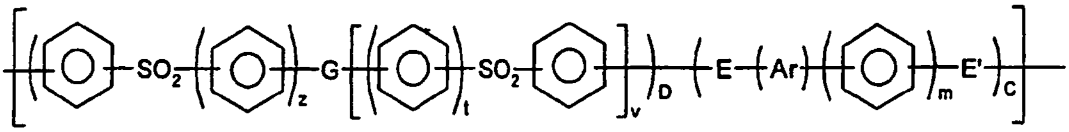 V*

oder ein statistisches oder Blockcopolymer von wenigstens zwei
unterschiedlichen Einheiten von IV* und/oder V* ist, mit der Maßgabe, dass Wiederholungseinheiten (oder Teile von Wiederholungseinheiten) funktionalisiert sind, um Ionenaustauschstellen bereitzustellen;
wobei A, B, C und D unabhängig voneinander 0 oder 1 bedeuten und E, E', G, Ar, m, r, s, t, v, w und z wie in Anspruch 12 beschrieben sind.

**15.** Verfahren nach einem der vorangehenden Ansprüche, wobei das ionenleitfähige Polymermaterial wenigstens einige Ketoneinheiten in der Polymerkette umfasst.

**16.** Verfahren nach einem der vorangehenden Ansprüche, wobei das ionenleitfähige Polymermaterial -Ether-Biphenyl-Ether-Phenyl-Keton-Einheiten umfasst.

**17.** Polymermaterial enthaltende Formulierung (nachstehend "die pmc-Formulierung"), welche ein ionenleitfähiges Polymermaterial in einer Lösungsmittelformulierung gelöst und/oder dispergiert umfasst, wobei:

(a) das ionenleitfähige Polymermaterial umfasst:

(i) Phenyleinheiten;
(ii) Carbonyl- und/oder Sulfoneinheiten; und
(iii) Ether- und/oder Thioethereinheiten; und

(b) mehr als 95 Gew.-% der Lösungsmittelformulierung aus Wasser besteht.

**18.** Polymermaterial nach Anspruch 17, wobei die PMC-Formulierung wenigstens 9 Gew.-% des ionenleitfähigen Polymermaterials umfasst.

**19.** Verfahren zum Herstellen eines Gegenstands, wobei das Verfahren den Schritt des Inkontaktbringens eines Elements bzw. Konstruktionsteils mit einer Formulierung, wie sie in einem der vorangehenden Ansprüche beschrieben ist, umfasst.

**20.** Verfahren nach Anspruch 19, welches zum Abscheiden des Polymermaterials auf dem Element bzw. Konstruktionsteil verwendet wird.

## Revendications

**1.** Procédé pour préparer une formulation comprenant un matériau polymère conducteur d'ions, lequel procédé comprend :

(a) la sélection d'un matériau polymère conducteur d'ions d'un type qui comprend :

(i) des fragments phényle ;
(ii) des fragments carbonyle et/ou sulfone ; et
(iii)des fragments éther et/ou thioéther ;

(b) la sélection d'un mélange solvant comprenant de l'eau et un premier solvant organique, mélange dans lequel ledit matériau polymère conducteur d'ions peut être dissous et/ou dispersé ;
(c) la dissolution et/ou la dispersion dudit matériau polymère conducteur d'ions dans ledit mélange solvant ;
(d) l'élimination de plus de 80 % de la quantité totale dudit premier solvant organique dans ledit mélange solvant, de façon à laisser une formulation comprenant ledit matériau polymère conducteur d'ions dissous et/ou dispersé dans une formulation de solvant comprenant une quantité majeure d'eau.

**2.** Procédé selon la revendication 1, dans lequel ledit premier solvant organique sélectionné dans l'étape (b) est miscible à l'eau à 25°C et a un point d'ébullition inférieur à celui de l'eau.

**3.** Procédé selon la revendication 1 ou la revendication 2, dans lequel ledit premier solvant organique a jusqu'à 5 atomes de carbone.

**4.** Procédé selon l'une quelconque des revendications précédentes, dans lequel ledit premier solvant organique comprend un groupe fonctionnel hydroxyle, éther ou carbonyle.

**5.** Procédé selon l'une quelconque des revendications précédentes, dans lequel ledit premier solvant organique est choisi parmi l'acétone, la méthyléthylcétone, l'éthanol et le tétrahydrofurane.

**6.** Procédé selon l'une quelconque des revendications précédentes, dans lequel ledit mélange solvant comprend un deuxième solvant organique facultatif ayant un point d'ébullition qui est supérieur à celui dudit premier solvant organique.

**7.** Procédé selon la revendication 6, dans lequel ledit deuxième solvant organique a un point d'ébullition sous la pression atmosphérique qui est supérieur d'au moins 20°C au point d'ébullition dudit premier solvant organique.

**8.** Procédé selon l'une quelconque des revendications précédentes, dans lequel le rapport du pourcentage en poids d'eau sur le pourcentage en poids dudit premier solvant organique est situé dans la plage allant de 0,25 à 2,5.

**9.** Procédé selon l'une quelconque des revendications précédentes, dans lequel ledit mélange solvant de l'étape (c) comprend au moins 1 % en poids et moins de 20 % en poids dudit matériau polymère conducteur d'ions.

**10.** Procédé selon l'une quelconque des revendications précédentes, dans lequel l'étape (c) du procédé est mise en oeuvre à une température qui est inférieure au point d'ébullition du mélange solvant.

**11.** Procédé selon l'une quelconque des revendications précédentes, dans lequel, après élimination du premier solvant organique, la formulation de solvant qui contient une quantité majeure d'eau comprend au moins 10 % en poids et moins de 30 % en poids dudit matériau polymère conducteur d'ions.

**12.** Procédé selon l'une quelconque des revendications précédentes, dans lequel ledit matériau polymère conducteur d'ions comprend :

un fragment de formule

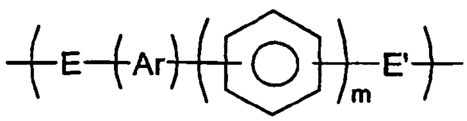

I

et/ou un fragment de formule

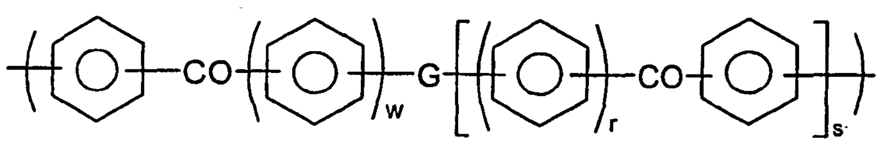

II

et/ou un fragment de formule

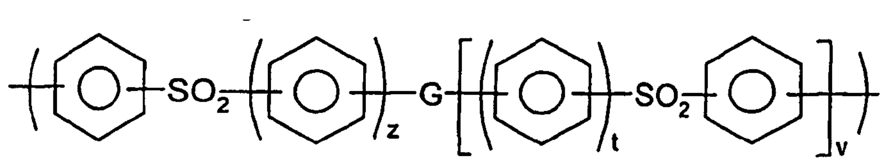

III

dans lequel au moins certains des motifs I, II et/ou III sont fonctionnalisés pour offrir des sites d'échange d'ions, dans lequel les fragments phényle dans les motifs I, II et III sont indépendamment éventuellement substitués et éventuellement réticulés ; et dans lequel m, r, s, t, v, w et z représentent indépendamment zéro ou un entier positif, E et E' représentent indépendamment un atome d'oxygène ou de soufre ou une liaison directe, G représente un atome d'oxygène ou de soufre, une liaison directe ou un fragment -O-Ph-O- où Ph représente un groupe phényle et Ar est choisi parmi l'un des fragments suivants (i) * ou (i) à (x), qui est lié via un ou plusieurs de ses fragments phényle à des fragments adjacents

(i)* 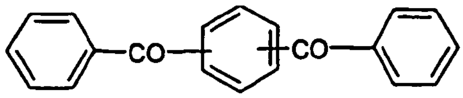

(i) 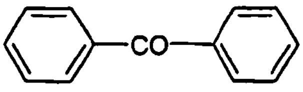

(ii) 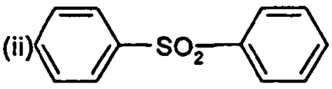

(iii) 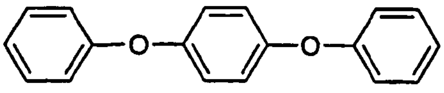

(iv) 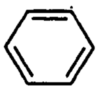

(v) 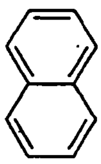

(vi) 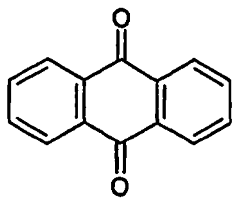

(vii) 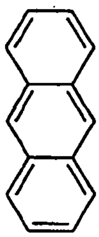

(viii) 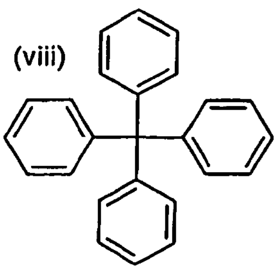

(ix) 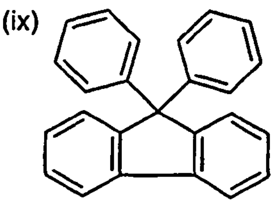

(x) 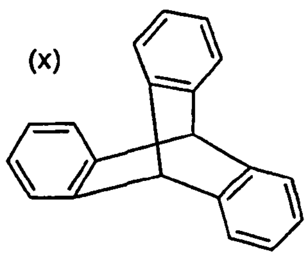

**13.** Procédé selon l'une quelconque des revendications précédentes, dans lequel ledit matériau polymère est sulfoné.

**14.** Procédé selon l'une quelconque des revendications précédentes, dans lequel ledit matériau polymère est un homopolymère ayant un motif répétitif de formule générale

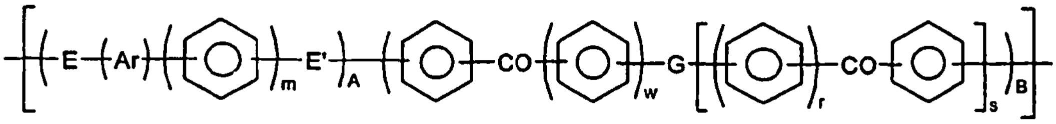

IV

ou un homopolymère ayant un motif répétitif de formule générale

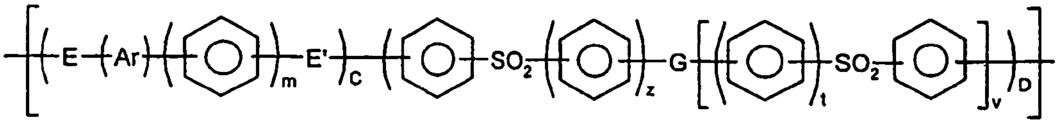

V

ou un copolymère statistique ou séquencé d'au moins deux motifs différents IV et/ou V, sous réserve que les motifs répétitifs (ou des parties de motif répétitif) soient fonctionnalisés pour offrir des sites d'échange d'ions ;
ou un homopolymère ayant un motif répétitif de formule générale

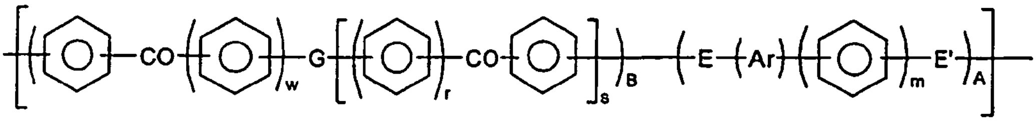

IV*

ou un homopolymère ayant un motif répétitif de formule générale

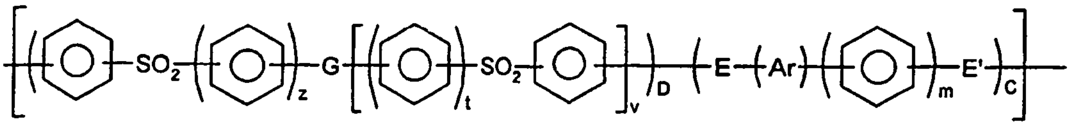

V*

ou un copolymère statistique ou séquence d'au moins deux motifs différents IV* et/ou V*, sous réserve que les motifs répétitifs (ou des parties de motif répétitif) soient fonctionnalisés pour offrir des sites d'échange d'ions ;
A, B, C et D représentant indépendamment 0 ou 1 et E, E', G, Ar, m, r, s, t, v, w et z sont tels que décrits dans la revendication 12.

**15.** Procédé selon l'une quelconque des revendications précédentes, dans lequel ledit matériau polymère conducteur d'ions contient au moins quelques fragments cétoniques dans la chaîne polymère.

**16.** Procédé selon l'une quelconque des revendications précédentes, dans lequel ledit matériau polymère conducteur d'ions contient des motifs -éther-biphényl-éther-phényl-cétone.

**17.** Formulation contenant un matériau polymère (ci-après "ladite formulation pmc") qui comprend un matériau polymère conducteur d'ions dissous et/ou dispersé dans une formulation de solvant, dans laquelle :

(a) ledit matériau polymère conducteur d'ions comprend :

(i) des fragments phényle ;
(ii) des fragments carbonyle et/ou sulfone ; et
(iii)des fragments éther et/ou thioéther ;

(b) plus de 95 % en poids de ladite formulation de solvant sont constitués d'eau.

**18.** Matériau polymère selon la revendication 17, dans lequel ladite formulation pmc contient au moins 9 % en poids dudit matériau polymère conducteur d'ions.

**19.** Procédé pour fabriquer un objet, qui comprend l'étape consistant à amener en contact un élément avec une formulation telle que décrite dans l'une quelconque des revendications précédentes.

**20.** Procédé selon la revendication 19, qui est utilisé pour déposer le matériau polymère sur ledit élément.

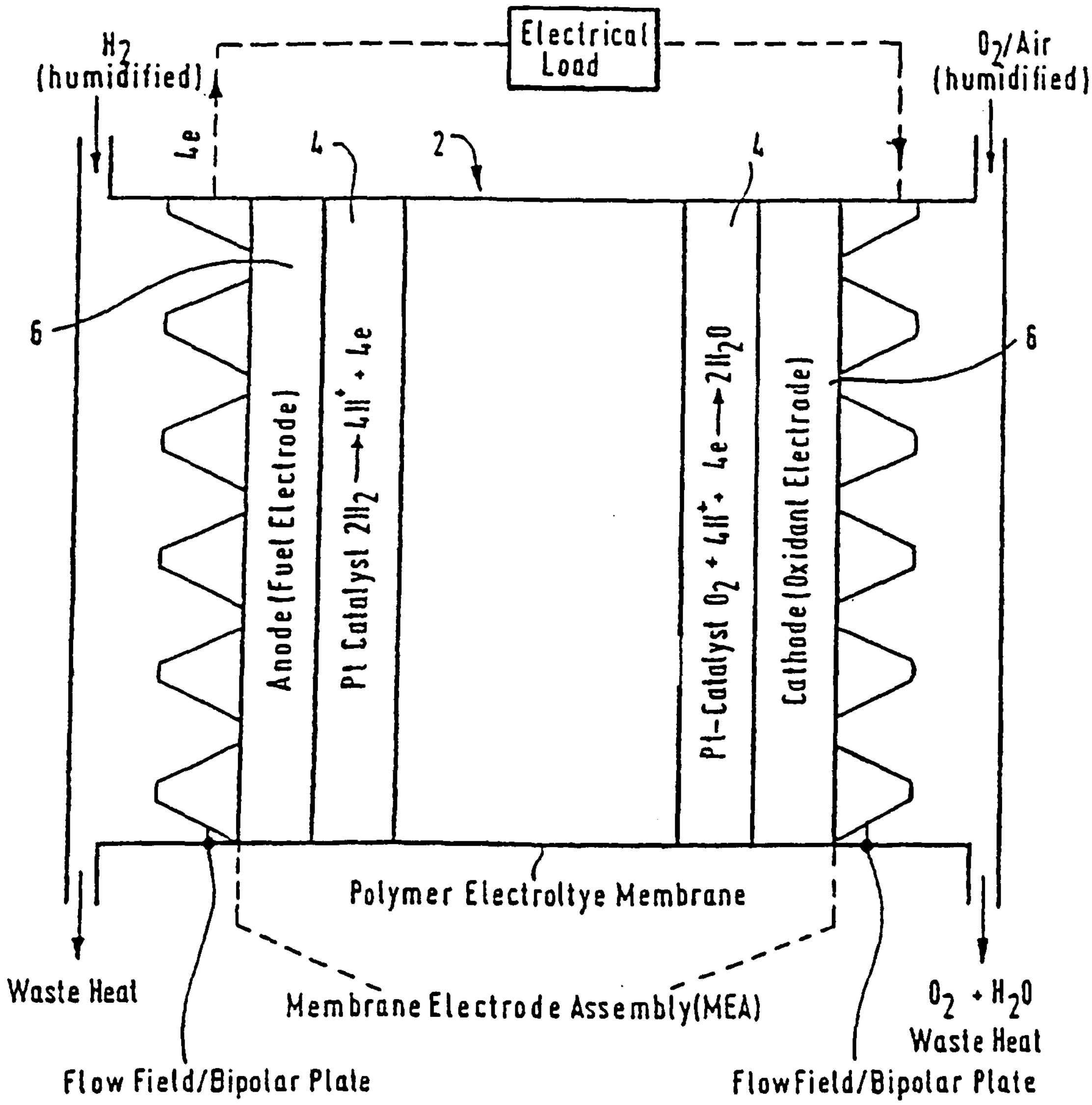

Electrical Load
$H_2$ (humidified)
$O_2$/Air (humidified)
4e
4
2
4
6
6
Anode (Fuel Electrode)
Pt Catalyst $2H_2 \longrightarrow 4H^+ + 4e$
Pt-Catalyst $O_2 + 4H^+ + 4e \longrightarrow 2H_2O$
Cathode (Oxidant Electrode)
Polymer Electroltye Membrane
Waste Heat
Membrane Electrode Assembly(MEA)
$O_2 + H_2O$
Waste Heat
Flow Field/Bipolar Plate
FlowField/Bipolar Plate


FIG.1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5985477 A, Sumitomo
- US 5906716 A, Hoechst
- WO 9508581 A
- WO 9629360 A
- US 5561202 A
- EP 0008895 A